# EUROPEAN PATENT SPECIFICATION

(11) **EP 3 593 999 B1**
(45) Date of publication and mention of the grant of the patent: **04.05.2022**
(21) Application number: 18182718.9
(22) Date of filing: 10.07.2018
(51) Int. Cl.: B33Y 80/00, B22F 3/105, B33Y 10/00, B33Y 50/00, B29C 64/153, B29C 64/386, B29C 64/268

(54) **METHOD OF ANALYTICALLY DETERMINING LASER POWER FOR SINTERING**
VERFAHREN ZUR ANALYTISCHEN BESTIMMUNG DER LASERLEISTUNG BEIM SINTERN
PROCÉDÉ PERMETTANT DE DÉTERMINER PAR ANALYSE LA PUISSANCE LASER POUR LE FRITTAGE

(43) Date of publication of application: 15.01.2020
(73) Proprietor: Hexcel Corporation, Dublin, CA 94568 (US)
(72) Inventor: DEFELICE, Scott, Holyoke, Massachusetts 01040 (US); DECARMINE, Anthony, Lebanon, Connecticut 06249 (US)
(74) Representative: TLIP Limited

(56) References cited:
- EP-A1- 1 486 317
- EP-A1- 3 372 384
- WO-A1-92/08567
- WO-A1-2014/028505
- WO-A1-2015/031758

## Description

The present disclosure generally relates to additive manufacturing technology and techniques. More specifically, the present disclosure relates to a system and method for determining an optimal setting for a laser in a selective laser sintering ("SLS") machine to additively manufacture (i.e. print) an object from polyaryletherketone ("PAEK") polymer powder, recycled powder, and/or other materials.

It is known to use additive manufacturing technology and techniques, together with polymer powders, to manufacture high-performance products having applications in various industries (e.g., aerospace, industrial, medical, etc.).

SLS is an additive manufacturing technique that uses electromagnetic radiation from a laser, for example from a CO₂ laser, to selectively fuse particles of plastic, metal (direct metal laser sintering), ceramic, or glass powders into a mass having a desired three dimensional shape. SLS may also be referred to as laser sinter or LS. The mass or object is built layer-by-layer on a base plate with the laser traversing each layer in the x-y plane. The laser selectively fuses the powder material by scanning cross-sectional layers generated from a three-dimensional digital description of the desired object onto the top layer or surface of a bed of powder material. That is, the powder must absorb enough laser energy to reach a fusing state necessary for bonding between powder particles. After a cross-sectional layer is scanned, the base plate is lowered by one layer thickness in a z-axis direction, a new layer of powder material is disposed on the bed, and the bed is rescanned by the laser. This process is repeated until the build (i.e., building of the object) is completed.

Prior to scanning, an SLS machine may preheat the powder material disposed on the bed to a temperature proximate to a melting point of the powder. Preheating may be accomplished by heating the actual bed, which transfers energy to the powder in the form of heat via thermal conduction. Pre-heating is also provided via radiant heaters disposed above the bed surface. Preheating the powder makes it easier for the laser to raise the temperature of powder to a fusing point and may inhibit unwanted distortions in the formed object(s) during cooling.

After the layer-wise (layer-by-layer) process is completed, the formed object(s) is disposed in a volume of unfused powder material, referred to as a cake. The formed object(s) is extracted from the cake. The powder material from the cake that is not fused into the built object(s) can be recovered, sieved, and used in a subsequent SLS build process.

Polyaryletherketones ("PAEK") are of interest in the SLS process because parts that have been sintered from PAEK powder are characterized by a low flammability, a good biocompatibility, and a high resistance against hydrolysis and radiation. The thermal resistance at elevated temperatures as well as the chemical resistance distinguishes PAEK powders from ordinary plastic powders. A PAEK polymer powder may be a powder from the group of polyetheretherketone ("PEEK"), polyetherketone ketone ("PEKK"), polyetherketone ("PEK"), polyetheretherketoneketone ("PEEKK"), or polyetherketoneetherketoneketone ("PEKEKK").

The SLS process is controlled by several groups of parameters, including laser-related parameters, scan-related parameters, powder-related parameters and temperature related parameters. Laser-related parameters can involve laser power, spot size, pulse duration, and pulse frequency. Laser power, in particular, is an important build parameter in laser sintering. The density/porosity and mechanical behavior of an object manufactured by SLS is a function of the laser power and the accumulated laser energy density. In some embodiments, the power of the laser (e.g., CO₂ laser) in the SLS machine can by adjusted prior to each build. For example, the EOSINT P 800 laser sintering system created by EOS Gmbh is provided with a 50 W CO₂ laser. The P 800 laser, for example, allows for adjustments to the power of the laser beam. In regard to building parts using PAEK polymers, in particular polyetheretherketone ("PEEK"), it is known to use a laser power between 30 W and 50 W to perform laser sintering. Further, parts built by conventional laser sintering methods (at high laser power) have demonstrated tensile strength and/or ductility that is lower than injection molded parts. The formation or presence of porosity, regular porosity between powder layers resulting in weak planar interfaces, and other microstructural defects have limited the use of conventional laser sintering in producing structural components.

Additionally, consistent powder characteristics are important for ensuring repeatable manufacture of objects. For example, metal powders used in additive manufacturing are assumed to be nominally spherical, and have a particle size distribution that is designed to facilitate good packing behavior, such that the final product has good mechanical properties. Manufacturers typically receive the base powder material from third-party producers in different batches. Each batch of powder material from a particular producer is assigned an identification number (e.g., batch number, lot number) for tracking and quality control checks. In conventional laser sintering methods, the manufacturers typically assume when different batches of powder from the same lot are used, that the powders are identical. Working under this assumption, they apply the same laser power setting for the SLS machine in sintering a particular powder material across different batches. However, such assumption is not grounded in reality, as there are often batch-to-batch variations in powder size, shape, melting points, glass transitions points, and other characteristics for a given powder material. This is especially true for semi-crystalline polymers such as PEKK that exhibit multiple melting points. Large particles tend to require more laser energy to fuse than small particles, so large variations in size can result in complete fusion of small particles (in one batch) and incomplete fusion of large particles (in another batch).

Thus, there exists a need in the art for an improved selective laser sintering method which utilizes lower laser power that is optimized for a given batch of powder material in order to consistently build the same object with greater tensile strength, as compared to the object being manufactured with high laser power.

WO2014/028505 discloses the testing of metal specimens obtained by laser sintering with different laser power levels.

The present invention aims to obviate or at least mitigate the above described problems and/or to provide improvements generally.

According to the invention there is provided a method of analytically determining an optimal laser power for configuring a laser in a selective laser sintering process according to claim 1.

The present invention further provides a method of carrying out selective laser sintering with a selected batch of powder material using a selective laser sintering machine, said method comprising analytically determining an optimal laser power setting for conducting a laser sintering process with the selected batch of powder material using a method according to any of claims 1-13 and configuring the selective laser sintering machine with the optimal laser power when conducting a laser sintering process using the chosen batch of powder material.

In preferred embodiments of the method of the present invention the step of inspecting each test rod for voids in a surface of the test rod further comprises the step of inspecting a fracture point of each test rod formed during an ASTM D638 test process. For example, such inspection may comprise inspecting a fracture point of each test rod formed during the ASTM D638 test process.

In further preferred embodiments of the method of the present invention the step of inspecting each test rod for voids further comprises inspecting a porosity of each test rod. In other embodiments, the step of inspection may involves monitoring the presence/absence of voids in the surfaces of the test rod, the manner in which the test rod fractures or breaks, where the fracture occurs, the presence of banding or bowing, and/or the porosity of the test rod. The method may further include steps of analyzing other factors affecting the laser sintering process and the lifecycle of the built test rod.

In preferred embodiments of the method of the present invention the optimal laser power is at least one watt below a lowest laser power setting associated with the formation of voids.

In particularly preferred embodiments of the method of the present invention the method further comprises the step of measuring a tensile strength of each test rod and comparing the tensile strength results to determine the strength of each test rod, optionally wherein the step of measuring the tensile strength of each test rod comprises measuring the tensile strength of each test rod in a z-axis and comparing the tensile strength results to determine which test rod of said plurality of test rods provides a higher break point in the z-axis. In this embodiment of the invention the step of measuring the tensile strength of each test rod preferably comprises testing each test rod according to ASTM D638 test process. It is known that Z strength reflects the strength of the internal bond between the layers of an additive manufactured part and is an important characteristic in additive manufacturing. The measurements may also include measuring the "X strength" or break point (psi) along the x-axis. It is noted that Z strength is a larger factor in determining whether an SLS manufactured part has satisfactory mechanical properties. By including tensile strength testing, the step of identifying the optimal laser power may comprise selecting a laser power setting based on the absence of voids in the respective test rod and on the tensile strength of the respective rod, wherein the optimal laser power provides the highest strength in z-axis with no formation of voids.

In the particularly preferred embodiments of the method of the present invention the step of identifying the optimal laser power optionally comprises selecting a laser power setting based on the absence of voids in the respective test rod and on the tensile strength of the respective rod, wherein the optimal laser power provides the highest strength in z-axis with no formation of voids.

In the particularly preferred embodiments of the method of the present invention the step of measuring the tensile strength of each test rod optionally comprises measuring at least one of the following for each test rod: Young's modulus, elongation to break, elongation at yield, nominal strain at break, secant modulus of elasticity, or Poisson's Ratio.

In preferred embodiments of the method of the present invention the plurality of test rods have substantially identical shapes.

In preferred embodiments of the method of the present invention the chosen batch of powder material comprises polyetherketoneketone (PEKK) polymer, preferably wherein the chosen batch of powder material comprises recycled PEKK polymer. In this embodiment, the recycled powder material is preferably left-over, unfused material from one previous build ("Cake A"). In some embodiments, the recycled powder material is unfused material left-over after having gone through two previous builds ("Cake B"). Still in other embodiments, the recycled powder material is unfused material left-over after having gone through three or more previous builds (e.g., "Cake C", Cake D").

In preferred embodiments of the method of the present invention the step of selecting a range of laser power comprises selecting a range between 5 W and 15 W. In some embodiments, the laser power increments may be determined and set at 0.5 W. In other embodiments, the laser power increments may be set at 0.2 W. In yet other embodiments, the lase power increments may be set at 0.1 W.

In preferred embodiments of the method of the present invention the step of programming comprises programming the selective laser sintering machine to build at least five test rods of said plurality of test rods at each laser power setting.

In preferred embodiments of the method of the present invention said steps of selecting a range of laser power and determining a power increment defines at least eight different laser power settings.

In preferred embodiments of the method of the present invention the step of programming comprises programming the selective laser sintering machine to build said plurality of test rods in one single build run. In such embodiments, the SLS machine is able to adjust the power of the laser beam at various points during one single build run. In other embodiments, the step of programming the SLS machine to construct the test rods involves more than one build to create test rods at each laser power increment. For example, the SLS machine may be programmed to construct multiple test rods at a laser power of 5.0 W in a first build, multiple test rods at a laser power of 5.5 W in a second build, multiple test rods at a laser power of 6.0 W in a third build, and so on and so forth. Accordingly, the SLS machine adjusts the power of the laser at the completion of a build. Alternatively, the SLS machine may be programmed to construct a first set, second set, third set, etc. of test rods in a first, second, third, etc. build, respectively, wherein each set comprises one (or more) test rod constructed at each laser power increment.

In some embodiments of the present teachings, the method comprises programming the SLS machine to construct multiple test rods at each power increment using the chosen batch of powder material. With multiple test rods built using laser power at, for example 10 W, one test rod can be subjected to Z strength testing, while another test rod is subjected to X-strength testing. Furthermore, multiple test rods built at a given laser power allow for multiple tensile strength tests to be performed. That is, two different test rods built at, for example 10W, can be tested for Z strength. The multiple tests can be used for purposes of verifying results or averaging results. Since the ASTM D638 testing process specifies at least five specimens for testing, it is preferable that at least five test rods at each laser power increment is constructed. In preferred embodiments of the method of additive manufacturing of the present invention the method further comprises the step of analytically determining bed temperatures of the SLS machine, as disclosed in US9937667.
FIG. 1 illustrates an SLS machine in accordance with one embodiment of the present teachings.
FIG. 2 illustrates a method of analytically determining an optimal laser power for laser sintering a particular batch of polymer powder.
FIG. 3 illustrates a qualification build layout for manufacturing a plurality of parts using SLS.
FIG. 4 is a table showing exemplary lots of powder material and the optimal laser power determined for the respective lot.
FIGS. 5a-5d are tables showing for each lot of powder material listed in FIG. 4, the mechanical properties of a test rod built with a specified laser power.
FIGS. 6a-6d are tables showing for each lot of powder material listed in FIG. 4, the x-axis inspection results of a test rod built with a specified laser power. The data contained in FIGS. 6a-6d are associated with the data contained in FIGS. 5a-5d, respectively.

The inventors have identified that using a reduced laser power in performing laser sintering of polymer powders, particularly PAEK polymer powders, more particularly PEKK powders, and more particularly recycled PEKK powders (unfused PEKK powder left-over from one or more previous builds) results in a completed part that is substantially stronger, particularly in the Z axis, as compared to parts manufactured with convention laser powers. It is conventionally known to practice laser sintering of PAEK powder with a laser power set in the range of 30 W to 50 W. The inventors, however have found that, unexpectedly, a laser power in the range of the 1 W to 10 W used to laser sinter a PEKK polymer, and more specifically recycled PEKK polymer, produces an object having strong tensile strength and structural integrity.

In addition, the inventors have identified a method and system to determine a laser power setpoint for a specific lot of powder (including a lot of recycled powder). By employing analytical methods and systems to each lot of powder, and, in some cases, to each run of the SLS machine, it is possible to determine an optimal laser power that results in finished parts having desired build properties, including more uniformity, reduced porosity, increased tensile strength. For example, the present invention has been to shown to result in completed parts have a Z strength (i.e., tensile strength in the z direction) greater than 7 KSI using ASTM D638.

The present teachings is especially useful for polyetherketoneketones, or PEKK. Polyetherketoneketones are well-known in the art and can be prepared using any suitable polymerization technique, including the methods described in the following patents U.S. Pat. Nos. 3,065,205; 3,441,538; 3,442,857; 3,516,966; 4,704,448; 4,816,556; and 6,177,518. PEKK polymers differ from the general class of PAEK polymers in that they often include, as repeating units, two different isomeric forms of ketone-ketone. These repeating units can be represented by the following Formulas and II:

-A-C(=O)-B-C(=O)- I

-A-C(=O)-D-C(=O)- II

where A is a p,p'-Ph-O-Ph-group, Ph is a phenylene radical, B is p-phenylene, and D is m-phenylene. The Formula I:Formula II isomer ratio, commonly referred to as the T:I ratio in the polyetherketoneketone is selected so as to vary the total crystallinity of the polymer. The T/I ratio is commonly varied from 50:50 to 90:10, and in some embodiments 60/40 to 80/20. A higher T:I ratio such as, 80:20, provides a higher degree of crystallinity as compared to a lower T:I ratio, such as 60:40.

The crystal structure, polymorphism and morphology of homopolymers of PEKK have been studied and have been reported in for example Cheng, Z. D. et al, "Polymorphism and crystal structure identification in poly(aryl ether ketone ketone)s", Macromol. Chem Phys. 197, 185-213 (1996). This article studied PEKK homopolymers having all para-phenylene linkages [PEKK(T)], one meta-phenylene linkage [PEKK(I)] or alternating T and I isomers [PEKK(T/I)]. PEKK(T) and PEKK(T/I) show crystalline polymorphism depending upon the crystallization conditions and methods.

In PEKK(T), two crystalline forms, forms I and II are observed. Form I can be produced when samples are crystallized from the melt at low supercooling, while Form II is typically found via solvent-induced crystallization or by cold-crystallization from the glassy state at relatively high supercooling. PEKK(I) possesses only one crystal unit cell which belongs to the same category as the Form I structure in PEKK(T). The c-axis dimension of the unit cell has been determined as three phenylenes having a zig-zag conformation, with the meta-phenylene lying on the backbone plane. PEKK(T/I) shows crystalline forms I and II (as in the case of PEKK(T)) and also shows, under certain conditions, a Form III.

Suitable polyetherketoneketones are available from several commercial sources under various brand names. For example, polyetherketoneketones are sold under the brand name OXPEKK^{™} polymers by Oxford Performance Materials, Enfield, Conn., including OXPEKK^{™}-C, OXPEKK^{™}-CE, OXPEKK^{™}-D and OXPEKK^{™}-SP polymers. Polyetherketoneketone polymers are also manufactured and supplied by Arkema. In addition to using polymers with a specific T:I ratio, mixtures of polyetherketoneketones may be employed.

Other useful polymers in the present teachings include, but are not restricted to PEEKEK, PEEKK, PEKEKK (where the E=ether and the K=ketone). Blends or mixtures of polyetherketoneketones may also be employed within the scope of this invention. Other polymorphic polymers that could benefit from the heat-treatment of the invention include, but are not limited to: polyamide 11 (PA11) and polyvinylidene fluoride (PVDF) homopolymers and copolymers.

The heat treatment described in the present teachings could also be applicable to materials with a single crystal form such as PEEK (polyether ether ketone) and PEK (polyether ketone), where the treatment at elevated temperatures will promote increases in the linear degree of crystallinity of the crystalline lamellae, affecting in a direct manner the melting temperature of the final product.

The powders used in these applications are prepared by a variety of processes such as grinding, air milling, spray drying, freeze-drying, or direct melt processing to fine powders. The heat treatment can be accomplished before or after the powders are produced, but if treated prior to forming the powders, the temperature of the powder forming process must be regulated so as to not significantly reduce the melting temperature or the quantity of the crystallinity formed in the heat treatment process.

The heat treatment process and the powders produced by this process are not limited to any particular particle size. And as discussed above, the particle size can be adjusted prior to or after the heat treatment process based on the needs of the specific application as long as the beneficial properties of high melting point and high degree of crystallinity are not compromised. In general, heat-treated powders will have a weight average particle size of between 0.002 nm to 0.1 meter, and more preferably from 0.01 nm to 1.0 mm. For use in selective laser sintering (SLS) a weight average particle size of 15 to 150 microns is preferred.

According to one aspect of the present teachings, a method for preparing a PEKK powder for use in SLS includes the steps of: providing a raw, non-powder PEKK material; heat treating the raw PEKK to evaporate at least substantially all of a liquid solvent in the raw PEKK, causing at least substantially all of the raw PEKK to be in the form of irregularly-shaped particles; cooling the raw PEKK; and grinding the raw PEKK to form a fine PEKK powder.

### Method of Laser Printing

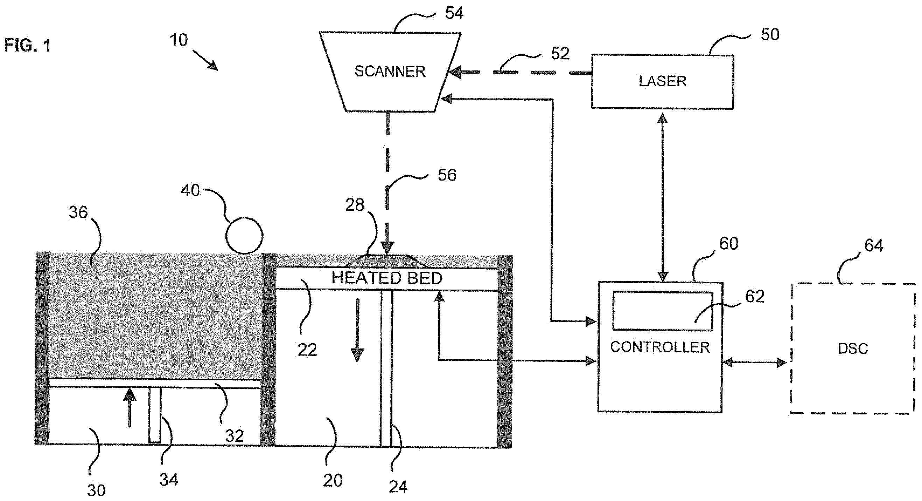

In reference to FIG. 1, a selective laser sintering (SLS) machine 10 in accordance with the present teachings is illustrated. The system 10 includes a first chamber 20 having an actuatable piston 24 disposed therein. A bed or base plate 22 is disposed at an end of the piston 24. The temperature of the bed 22 can be variably controlled via a controller 60 in communication with heating elements in and or around the bed 22. The bed temperature setpoint is input through an interface 62 into the controller 60. Software executing on the controller 60 transmits a signal to one or more heating elements to heat the bed at or around the temperature setpoint. A second chamber 30 is adjacent to the first chamber 20. The second chamber 30 includes a table surface 32 disposed on an end of a piston 34 disposed therein. A powder 36 for use in the SLS machine 10 is stored in the second chamber 30 prior to the sintering step.

While a particular embodiment of an SLS machine is disclosed, the present teachings are not limited in this regarding and the present teachings may be practiced with different high temperature SLS machines, such as the EOSINT 800 manufactured and sold by EOS GmbH, based in Krailling, Germany.

Referring to FIG. 1, during operation of the SLS machine 10, a spreader 40 or similar device traverses or translates across a top surface of the first chamber 20, evenly distributing a layer of powder 36 (e.g., PEKK powder, fine PEKK powder, recycled PEKK powder) across either the top surface of the bed 22, or the material previously disposed on the bed. The SLS machine 10 preheats the powder material 36 disposed on the bed 22 to a temperature proximate to a melting point of the powder. Preheating is typically accomplished by heating the actual bed, as described above, which transfers energy to the powder in the form of heat via thermal conduction. Preheating the powder makes it easier for the laser to raise the temperature of powder to a fusing point. In some embodiments of the present teachings, there are also one or more heating elements in and/or around the second chamber 30 in order to heat the powder 36 prior to being delivered to the sintering surface (bed 22).

A laser 50 and a scanning device 54 are disposed above the bed. In the P 800, the laser is a 50 W CO₂ laser. It is noted that the 50 W CO₂ laser is exemplary, and the present teachings are not limited thereto. The laser transmits a beam 52 to the scanner 54, which then distributes a laser beam 56 across the layer of powder 36 disposed on the bed 22 in accordance with a build program. The laser selectively fuses powdered material by scanning cross-sections generated from a three dimensional digital description of the part on the surface of the bed 56 having a layer of the powdered material disposed thereon. The laser 50 and the scanner 54 are in communication with the controller 60. After a cross-section is scanned, the bed 22 is lowered by one layer thickness, a new layer of powdered material is disposed on the bed via the spreader 40, and the bed is rescanned by the laser. This process is repeated until the build 28 is completed. During this process, the cylinder 34 in the second chamber is incrementally raised to ensure that there is sufficient supply of powder. The SLS machine in FIG. 1 may also be configured with a mechanism for analytically determining bed temperatures of the SLS machine, as disclosed in U.S. 9937667.

Using the above described PEKK, the bed temperature is set to approximately 285 degrees Celsius and the laser power is set at a power in the range of 1 W to 20 W. In some embodiments, the laser power is set within a range of 5 W to 10 W. In some embodiments, the laser power is set within a range of 6 W to 9 W. For example, the power may be set at 5 W or 8 W. A powder layer thickness of 125 microns is typical. After the layer-wise build is performed, the powder cake is allowed to cool at controlled rates. For example, for PEKK, the cake is typically cooled at between 1 and 100 degrees Celsius per hour. It should be appreciated by a person of ordinary skill in the art that the rate of cooling depends on the dimensions of the cake, with deeper beds typically requiring more time to cool.

Parts manufactured by using the disclosed process demonstrated a greater tensile strength as determined by the ASTM D638 as compared to parts manufactured using a laser power selected in the range of 30 W to 50 W, as is known in the art and as is recommended by the manufacturer of the EOSINT P 800 SLS machine.

In order to determine the optimal laser power to use in configuring the SLS machine for selectively laser sintering a particular batch of polymer powder, a method of analytically determining laser power for laser printing may be used and is described in detail below.

### Method of Analytically Determining Laser Power for Laser Printing

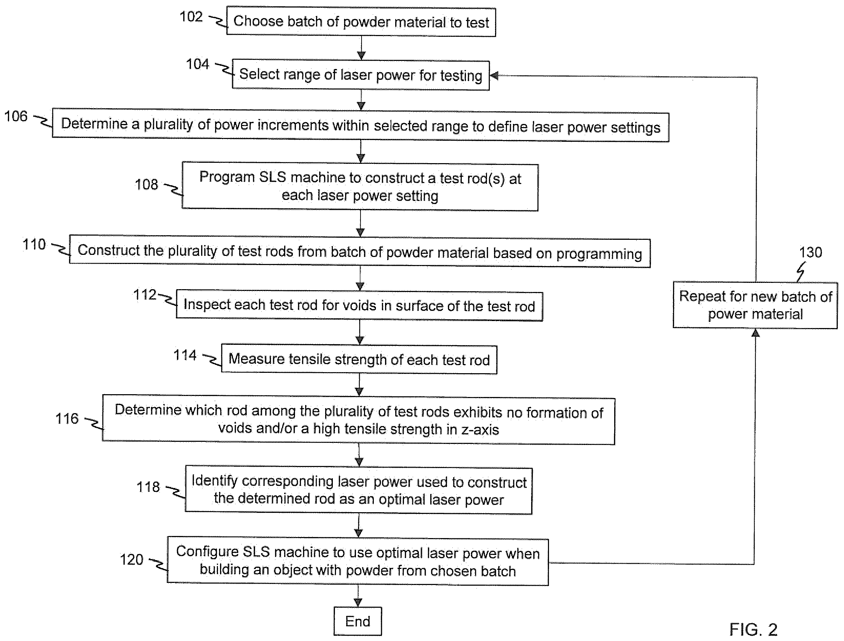

In one embodiment of the present teachings, a method of determining a preferred and/or optimal laser power for a specific batch or lot of powder is provided. Referring to FIG. 2, the method first includes the step 102 of choosing a batch of powder material for building a plurality of test rods or test coupons. A manufacturer specializing in additive manufacturing (e.g., SLS) usually receives the base material from third-party producers in different batches. Each batch of base material is designated with a batch number and/or lot number, which identifies the origin and characteristics of the base material. The batch number and/or lot number allows the history of the batch's production to be traced and provides for quality control checks. Also, all relevant issues of control and production particulars may also be traceable from the batch and/or lot numbers.

The polymer powder comprises PAEK powder, and in particular PEKK powder. The batch of powder may comprise PEKK powder or alternatively, PEKK polymer with carbon (ESD) that has been treated prior to laser sintering. Still, in some embodiments, the batch of powder is made up of recycled polymer powder that were not subjected to fusion and were left-over from one or more previous build runs. For example, the recycled powder material may be left-over, unfused material from one previous build ("Cake A"). Unfused powder material left-over after having gone through two previous builds ("Cake B") may be recycled and used. Still in other cases, the recycled powder material is unfused material left-over after having gone through three or more previous builds (e.g., "Cake C", Cake D").

Once a batch has been chosen, a range of laser powers for sintering the powder material is selected in step 104. The range of laser powers to test is between 1 W and 20 W. In some embodiments, the range of laser powers to test may be narrower than 1 W to 20 W. That is, 5 W to 15 W, 5 W to 10 W, or 6 W to 9 W may be possible laser power ranges.

Thereafter, in step 106, a plurality of power increments within the selected range is determined to define laser power settings for constructing test rods (e.g., dumbbell structure, dogbone structure). For example, increments of 0.5 W may be determined for a range of 5 W to 15 W, such that one or more test rods are constructed from laser sintering the polymer powder at each of 5.0 W, 5.5 W, 6.0 W, 6.5 W, 7.0 W, ... 14.0 W, 14.5 W, and 15.0 W. Depending on how wide or narrow the selected range of laser power is, larger increments (e.g., 1.0 W increment) may be used so that the number of test rods to be constructed and tested may be reduced. Conversely, smaller increments (e.g., 0.2 W increment, 0.1 W increment) may be determined in order to achieve greater precision and accuracy for determining which particular laser power setting is preferable and/or optimal for sintering the chosen batch of powder material. In one embodiment, at least 8 different laser power settings are chosen for qualification testing. In a preferred embodiment, with respect to steps 104-106, a table with every past lot of powder that includes the range of exposures used, the temperature settings (of the chamber), the chosen exposure, and information from DSC (differential scanning calorimetry) can be used to determine the at least 8 different laser power settings for the qualification build.

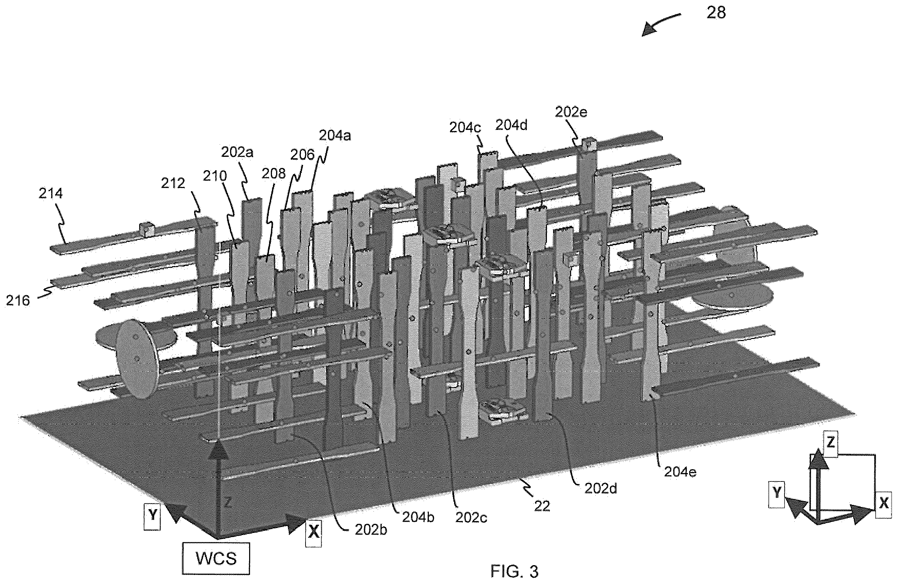

The method shown in FIG. 2 includes the step 108 of programming the additive manufacturing machine (e.g., SLS machine) to construct a number of identically shaped test rods at each laser power setting using the chosen batch of powder material. The step 108 may comprise programming the SLS machine to construct one or multiple test rods at each power setting using the chosen batch of powder material. As such, the laser 50 is adjusted in real-time to sinter at a first power setting (e.g., 5.0 W) and subsequently sinter at a second power setting (e.g., 5.5 W), so on and so forth. FIG. 3 illustrates this particular configuration, where multiple test rods 202-216 are constructed using different laser wattages (depicted by different shading in the figure). For example, test rods 202a-202e are built using laser wattage at 5.0 W, while test rods 204a-204e are built using laser wattage at 6.0 W. Further, the SLS machine may be programmed to construct a plurality of test rods so that their longitudinal axes are aligned in the z-direction (test rods 202-212) and another plurality of test rods so that their longitudinal axes lie in or are parallel to the x-y plane. The two different orientations for building the test rods allows for multiple tensile strength tests, as will be described in detail below.

With multiple test rods being built at each laser power setting, one test rod can be subjected to Z strength testing, while another test rod is subjected to X-strength testing, according to ASTM D638. Multiple test rods built at a given laser power also provide for multiple tensile strength tests to be performed for that particular laser power. That is, two different test rods built at, for example 10 W, can be tested for Z strength. The multiple tests can be used for purposes of verifying results or averaging results. Since the ASTM D638 testing process specifies at least five specimens for testing, it is preferable that at least five test rods at each laser power increment is constructed.

In some embodiments, the step of programming the SLS machine to construct the test rods involves programming the SLS machine to create test rods at each laser power setting in one single build run (FIG. 3). Accordingly, the SLS machine is able to adjust the power of the laser beam at various points during one single build run.

In other embodiments, the step of programming the SLS machine to construct the test rods involves multiple build runs to create test rods at each laser power setting. For example, the SLS machine may be programmed to construct multiple test rods at a laser power of 5.0 W in a first build, multiple test rods at a laser power of 5.5 W in a second build, multiple test rods at a laser power of 6.0 W in a third build, so on and so forth. Accordingly, the SLS machine adjusts the power of the laser at the completion of a build. Alternatively, the SLS machine may be programmed to construct a first set, second set, third set, etc. of test rods in a first, second, third, etc. build, respectively, wherein each set comprises at least one test rod constructed at each laser power setting.

The method according to the present teachings then includes the step 110 of using the SLS machine to construct the plurality of identically shaped test rods from the chosen batch of powder material based on the programming performed in step 108. Each of the test rods is sintered by a specified laser power setting. For example, in one embodiment, ten different laser powers are used to manufacture ten test rods. In this embodiment, for example, a laser power setting of 5.0 W is used for the first rod. The laser power increases in half Watt increments for each subsequent test rod. For example, a laser power setting of 5.5 W is used for the second rod, a laser power setting of 6 W is used for the third rod. In some high temperature machines, such as the EOSINT P 800, the machine is configured to provide variable laser power in a single build layer, wherein different laser powers can be used in discrete sections of the build layer. In this manner, it is possible to prepare a plurality of test rods using different laser powers from a single lot of powder in a single build.

After the build is complete, in step 112, each test rod is removed from the powder cake and then inspected (e.g., visually, using tomography, or other computer-based imaging) for voids in the surface(s) of the test rod. Voids in the surface of the test rod indicate a potential issue with the specific laser power used to construct the respective test rod. The step 112 may further comprise inspecting a fracture point of each test rod formed during an ASTM D638 test process. In addition, the porosity of each test rod may be inspected (e.g., visually, using tomography, or other computer-based imaging). For example, optical coherence tomography (OCT) or other computer-based imaging may be used to determine porosity of each test rod. The system shown in FIG. 1 may comprise an OCT sensor or scanner that provides in-situ, real-time subsurface visualization of the test rods as they are built. In some embodiments of the present invention, precision instruments are used to measure any voids identified during inspection.

In some embodiments, step 112 may also take into account the inspection of each test rod's mechanical properties and tensile behavior during an ASTM D638 testing process. For example, such inspection analysis may comprise monitoring the manner in which the test rod fractures or breaks, where the fracture occurs, and the presence of banding or bowing. The method may further include the step of analyzing other factors affecting the laser sintering and the lifecycle of the built test rod.

In addition to inspecting each test rod for voids, the method according to the present teachings may include the additional step 114 of measuring the tensile strength of each test rod and comparing the tensile strength results to determine strength of each test rod. In particular, each test rod is subjected to the ASTM D638 test procedure. ASTM D638 is a common plastic strength specifications and covers the tensile properties of unreinforced and reinforced plastics. This test method uses standard "dumbbell" or "dogbone" shaped specimens. A universal testing machine (tensile testing machine) performs the test. The testing machine obtains information about the tested part, including the tensile strength. The higher the yield strength, the more preferable the test rod.

In step 116 of the method according to the present teachings, it is determined, based on the inspection (step 112) and tensile strength measurements (step 114) which rod among the plurality of test rods exhibits the absence of voids in its surface and consequently better mechanical properties than a rod having voids. In addition to the results of inspection, high tensile strength balanced with other factors (e.g., porosity) may be used for determining which rod among the plurality of test rods possess acceptable/desirable mechanical properties. In some embodiments, this step includes analyzing the measurements of Z strength or the break point (psi) along the z-axis for each test rod. It is known that Z strength reflects the strength of the internal bond between the layers of an additive manufactured part and is an important characteristic in additive manufacturing. Based on evaluation of the tensile strength test results, one or more rods at a particular laser power may be identified as exhibiting higher "Z strength".

In other embodiments, the evaluation of tensile strength may also include an analysis of the elastic modulus or Young's modulus (psi) of each test rod, as well as the elongation to break/fracture (%) of each test rod. Other factors that may be monitored and evaluated are elongation at yield, nominal strain at break (grip separation), secant modulus of elasticity, and/or Poisson's Ratio.

In some embodiments, the step 116 may include evaluating each test rod with respect to its "x strength" or break point (psi) along the x-axis. For example, a test rod which exhibits improved tensile strength may exhibit a high Z strength and a high X strength.

In accordance with the present teachings, a plurality or rods manufactured at different laser powers from a single lot of powder or during a single build are inspected for void formation and tested using the ASTM D638. The test rod with the most desirable qualities is for example the rod having no formation of voids in the x-axis and a high Z strength.

Step 118 of the method according to the present teachings comprises identifying the laser power setting used to construct a respective test rod without formation of voids in the surface as an optimal laser power. In some embodiments, the optimal laser power is at least one watt below a lowest laser power setting associated with the formation of voids. That is, an exposure that is at least one watt below any voids in the x-bar or x-axis results. In other embodiments, the optimal laser power is at least one watt below a lowest laser power setting associated with the formation of voids and exhibits z-axis tensile strength that has not decreased substantially. In general, the highest wattage while avoiding possible voids is considered the optimal and/or preferable. In yet other embodiments, the step of identifying the optimal laser power comprises selecting a laser power setting based on the absence of voids in the respective test rod and on the tensile strength of the respective rod, wherein the optimal laser power provides the highest strength in z-axis with no formation of voids.

Thereafter, the laser power associated with the selected rod is then used for subsequent builds made from the same batch/lot of powder (step 120). That is, the SLS machine may be configured to use the optimal/preferable laser power when building an object(s) with powder from the chosen batch. In some embodiments, the optimal/preferable laser power and corresponding batch/lot number may be saved in a database or memory storage unit within the controller 62 so that the SLS machine can be configured at a later time when future construction of an object using the chosen batch of powder material is required.

In some embodiments of the present teachings, a DSC analysis of the specific lot of powder is performed and stored in association with the optimal laser power. In this manner, it is possible to prepare a library of optimal laser powers for different lots of powders based on the DSC. Such library may be saved in a database or memory storage unit within the controller 62. Thus, when a new lot of powder is prepared, a DSC analysis is conducted. If the DSC profile is similar to a profile stored in the library, the operator can determine the laser associated with the similar DSC profile in the library and use it with the new lot of powder.

Finally, the method shown in FIG. 2 may comprise a step 130, wherein steps 104-120 are repeated for another batch of powdered material.

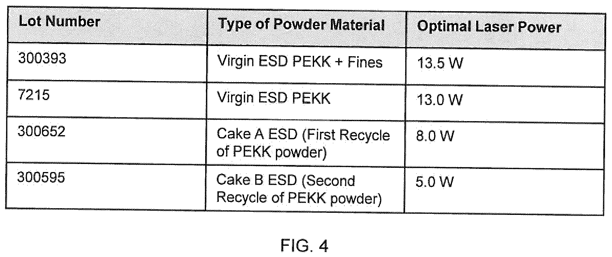

FIG. 4 shows a table of exemplary lots of powder material and the optimal and/or preferable laser power that was determined to produce objects with no voids and strong mechanical properties for the respective lot. For Lot # 300393, which consisted of Virgin ESD PEKK + Fines, an optimal laser power of 13.5 W was determined using the method according to the present teachings. In contrast, a laser power of 13.0 W was determined to be optimal or preferable for Lot # 7215 consisting of Virgin ESD PEKK. It was also unexpectedly discovered that recycled polymer powder demonstrated even lower laser powers to achieve no voids and strong tensile properties in objects constructed therefrom. For example, Lot # 300652 represents Cake A ESD (First Recycle of PEKK powder) and has an optimal laser power of 8.0 W. Moreover, a laser power of 5.0 W was determined as being optimal for Lot # 300595, consisting of Cake B ESD (Second Recycle of PEKK powder).

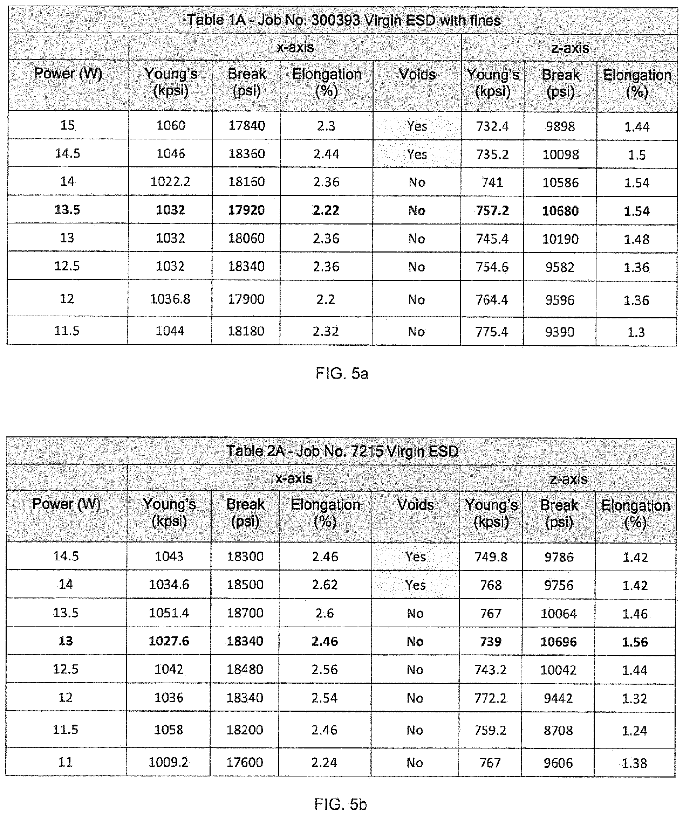

FIGS. 5a-5d shows detailed results of the inspection (for presence/absence of voids) and tensile strength tests (ASTM D638) performed on the tests rods produced using powdered material from the lots identified in FIG. 4. In FIG. 5a, relating to Lot No. 300393 Virgin ESD with fines, the lowest laser power setting associated with the formation of voids in the test rod was 14.5 W. Thus, the laser power setting of 13.5 W, which is one watt below 14.5 W and which exhibited no formation of voids, was identified as being the optimal laser power. The test rod produced using the 13.5 W laser beam exhibited a break point of approximately 10680 psi in the z-axis.

In FIG. 5b, relating to Lot No. 7215 Virgin ESD PEKK, the lowest laser power setting associated with the formation of voids in the test rod was 14.0 W. Thus, the laser power setting of 13.0 W, which is one watt below 14.0 W and which exhibited no formation of voids, was identified as being the optimal laser power. The test rod produced using the 13.0 W laser beam exhibited a break point of approximately 10696 psi in the z-axis.

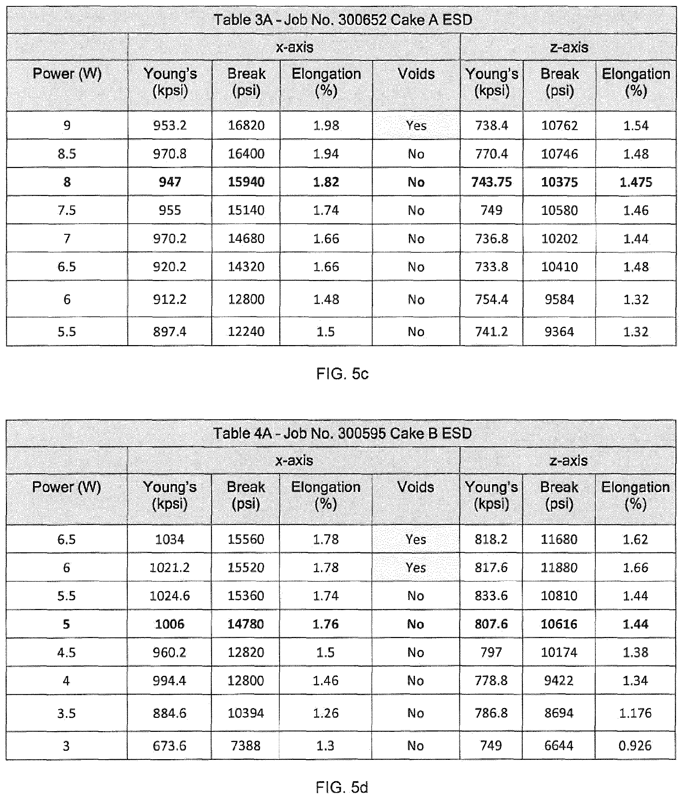

In FIG. 5c, relating to Lot No. 300652 represents Cake A ESD, the lowest laser power setting associated with the formation of voids in the test rod was 9.0 W. Thus, the laser power setting of 8.0 W, which is one watt below 9.0 W and which exhibited no formation of voids, was identified as being the optimal laser power. The test rod produced using the 8.0 W laser beam exhibited a break point of approximately 10375 psi in the z-axis.

In FIG. 5d, relating to Lot No. 300595 represents Cake B ESD, the lowest laser power setting associated with the formation of voids in the test rod was 6.0 W. Thus, the laser power setting of 5.0 W, which is one watt below 6.0 W and which exhibited no formation of voids, was identified as being the optimal laser power. The test rod produced using the 5.0 W laser beam exhibited a break point of approximately 10616 psi in the z-axis.

These results help demonstrate that recycled polymer powder material provides for lower laser power in laser sintering processes, without substantially reducing overall tensile strength and causing formation of voids in the built object/part.

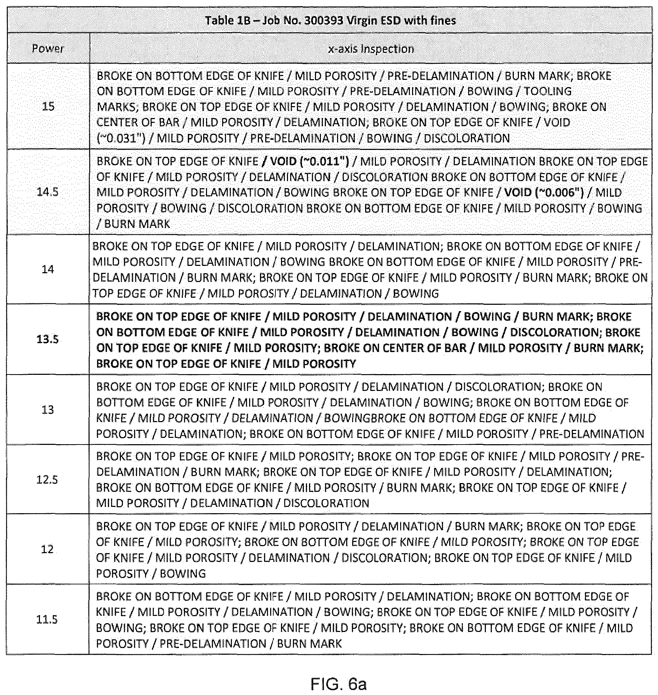

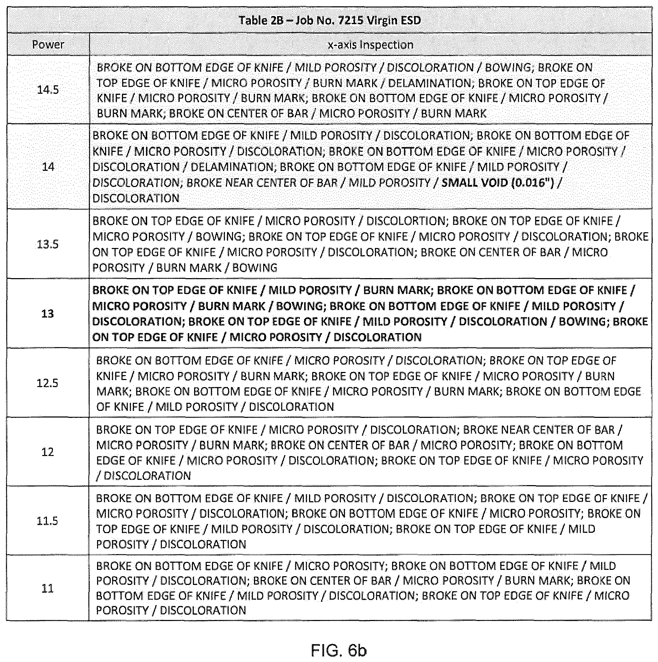

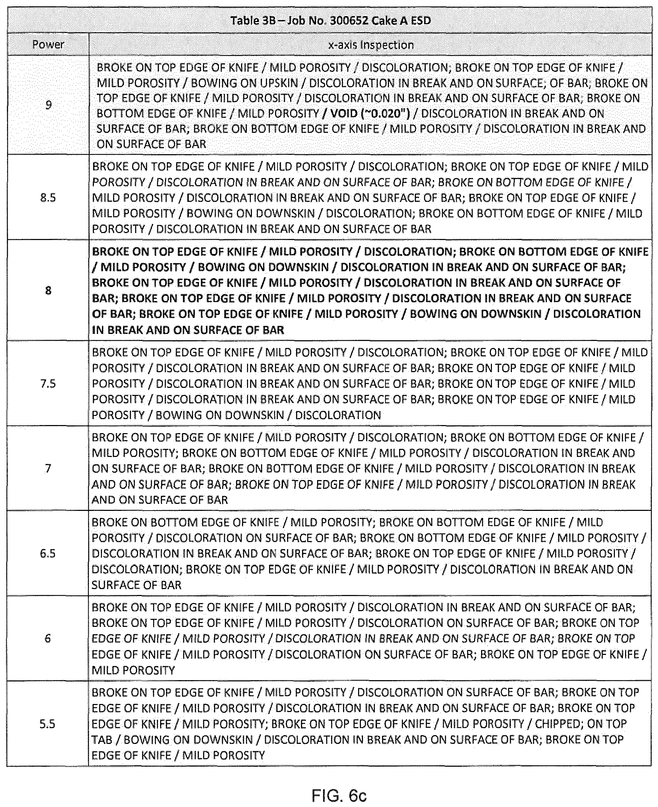

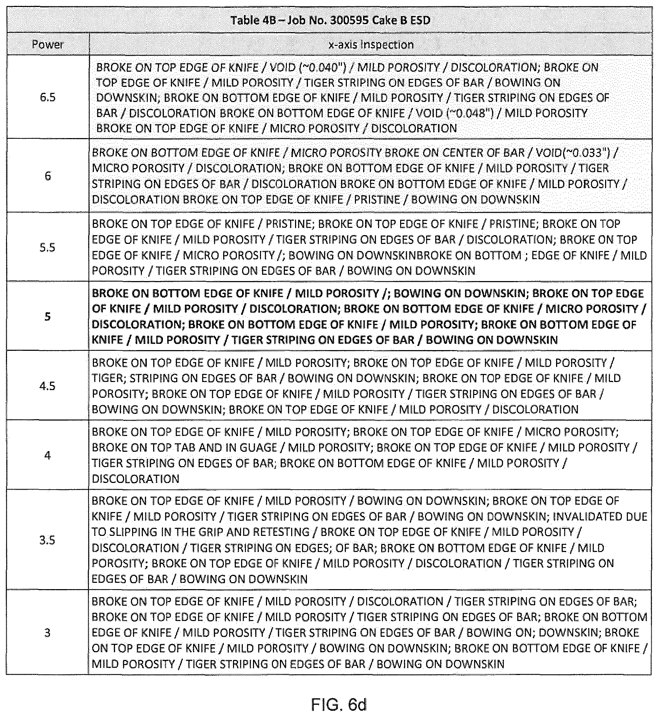

FIGS. 6a-6d shows inspection results (regarding formation of voids) of test rods in further detail. The data contained in FIGS. 6a-6d are associated with the data contained in FIGS. 5a-5d, respectively. These inspection results were utilized in determining and identifying the optimal laser power setting.

## Claims

1. A method of analytically determining an optimal laser power for configuring a laser in a selective laser sintering process, comprising:
choosing a batch of powder material (102) for building a plurality of test rods (202, 204, 206, 208, 210, 212), wherein the chosen batch of powder material comprises polyaryletherketone (PAEK) powder;
selecting a range of laser power (104) for building the plurality of test rods, comprising selecting a range of laser power between 1 W and 20 W;
determining a plurality of power increments within the selected range to define a plurality of different laser power settings (106);
programming a selective laser sintering machine to build at least one test rod of said plurality of test rods at each laser power setting (108);
constructing the plurality of test rods from the batch of powder material based on said programming (110);
inspecting each test rod for voids in a surface of the test rod (112); and
identifying the laser power setting used to construct a respective test rod without formation of voids in the surface as an optimal laser power for configuring the selective laser sintering machine when conducting a laser sintering process using the chosen batch of powder material (118).

2. The method of claim 1, wherein the step of inspecting each test rod for voids in a surface of the test rod (112) further comprises the step of inspecting a fracture point of each test rod formed during an ASTM D638 test process.

3. The method of claim 1 or claim 2, wherein the step of inspecting each test rod for voids (112) further comprises inspecting a porosity of each test rod.

4. The method of any preceding claim, wherein the optimal laser power is at least one watt below a lowest laser power setting associated with the formation of voids.

5. The method of any preceding claim, further comprising the step of measuring a tensile strength of each test rod (114) and comparing the tensile strength results to determine the strength of each test rod, optionally wherein the step of measuring the tensile strength of each test rod comprises measuring the tensile strength of each test rod in a z-axis and comparing the tensile strength results to determine which test rod of said plurality of test rods provides a higher break point in the z-axis (116); preferably wherein the step of measuring the tensile strength of each test rod (114) comprises testing each test rod according to ASTM D638 test process.

6. The method of claim 2, wherein the step of identifying the optimal laser power (118) comprises selecting a laser power setting based on the absence of voids in the respective test rod and on the tensile strength of the respective rod, wherein the optimal laser power provides the highest strength in z-axis with no formation of voids.

7. The method of claim 5 or claim 6, wherein the step of measuring the tensile strength of each test rod (114) comprises measuring at least one of the following for each test rod: Young's modulus, elongation to break, elongation at yield, nominal strain at break, secant modulus of elasticity, or Poisson's Ratio.

8. The method of any preceding claim, wherein the plurality of test rods (202, 204, 206, 208, 210, 212) have substantially identical shapes.

9. The method of any preceding claim, wherein the chosen batch of powder material comprises polyetherketoneketone (PEKK) polymer, preferably wherein the chosen batch of powder material comprises recycled PEKK polymer.

10. The method of any preceding claim, wherein the step of selecting a range of laser power (104) comprises selecting a range between 5 Wand 15 W.

11. The method of any preceding claim, wherein the step of programming (108) comprises programming the selective laser sintering machine to build at least five test rods of said plurality of test rods at each laser power setting.

12. The method of any preceding claim, wherein said steps of selecting a range of laser power (104) and determining a power increment (106) defines at least eight different laser power settings.

13. The method of any preceding claim, wherein the step of programming (108) comprises programming the selective laser sintering machine to build said plurality of test rods in one single build run (28).

14. A method of carrying out selective laser sintering with a selected batch of powder material using a selective laser sintering machine, said method comprising analytically determining an optimal laser power setting for conducting a laser sintering process with the selected batch of powder material using a method according to any of the preceding claims and configuring the selective laser sintering machine with the optimal laser power when conducting a laser sintering process using the chosen batch of powder material (120).

## Patentansprüche

1. Verfahren zum analytischen Bestimmen einer optimalen Laserleistung zum Konfigurieren eines Lasers in einem selektiven Lasersinterverfahren, umfassend:
Auswählen einer Charge von Pulvermaterial (102) zum Bauen einer Vielzahl von Teststäben (202, 204, 206, 208, 210, 212), wobei die ausgewählte Charge von Pulvermaterial Pulver aus Polyaryletherketon (PAEK) umfasst;
Auswählen eines Bereichs von Laserleistung (104) zum Bauen der Vielzahl von Teststäben, umfassend ein Auswählen eines Bereichs von Laserleistung zwischen 1 W und 20 W;
Bestimmen einer Vielzahl von Leistungsinkrementen innerhalb des ausgewählten Bereichs, um eine Vielzahl von verschiedenen Laserleistungseinstellungen (106) zu definieren;
Programmieren einer selektiven Lasersintermaschine, um mindestens einen Teststab der Vielzahl von Teststäben bei jeder Laserleistungseinstellung (108) zu bauen;
Herstellen der Vielzahl von Teststäben aus der Charge von Pulvermaterial basierend auf dem Programmieren (110);
Prüfen von jedem Teststab auf Hohlräume in einer Oberfläche des Teststabs (112); und
Identifizieren der Laserleistungseinstellung, die verwendet wurde, um einen entsprechenden Teststab ohne Bildung von Hohlräumen in der Oberfläche zu bauen, als optimale Laserleistung für die Konfiguration der selektiven Lasersintermaschine beim Durchführen eines Lasersinterprozesses unter Verwendung der gewählten Charge von Pulvermaterial (118).

2. Verfahren nach Anspruch 1, wobei der Schritt eines Prüfens von jedem Teststab auf Hohlräume in einer Oberfläche des Teststabs (112) ferner den Schritt eines Prüfens einer Bruchstelle von jedem Teststab umfasst, die während eines Testprozesses ASTM D638 gebildet wird.

3. Verfahren nach Anspruch 1 oder Anspruch 2, wobei der Schritt eines Prüfens von jedem Teststab auf Hohlräume (112) ferner ein Prüfen einer Porosität von jedem Teststab umfasst.

4. Verfahren nach einem vorherigen Anspruch, wobei die optimale Laserleistung mindestens ein Watt unter der niedrigsten Laserleistungseinstellung ist, die mit der Bildung von Hohlräumen assoziiert ist.

5. Verfahren nach einem vorherigen Anspruch, ferner umfassend den Schritt eines Messens einer Zugfestigkeit von jedem Teststab (114) und eines Vergleichens der Zugfestigkeitsresultate, um die Festigkeit von jedem Teststab zu bestimmen, optional wobei der Schritt eines Messens der Zugfestigkeit von jedem Teststab ein Messen der Zugfestigkeit von jedem Teststab in einer z-Achse und ein Vergleichen der Zugfestigkeitsresultate umfasst, um zu bestimmen, welcher Teststab der Vielzahl von Teststäben einen höheren Bruchpunkt in der z-Achse (116) bereitstellt; vorzugsweise wobei der Schritt eines Messens der Zugfestigkeit von jedem Teststab (114) ein Testen von jedem Teststab gemäß dem Testprozess ASTM D638 umfasst.

6. Verfahren nach Anspruch 2, wobei der Schritt eines Identifizierens der optimalen Laserleistung (118) ein Auswählen einer Laserleistungseinstellung basierend auf der Abwesenheit von Hohlräumen in dem jeweiligen Teststab und auf der Zugfestigkeit des jeweiligen Stabs umfasst, wobei die optimale Laserleistung die höchste Festigkeit in der z-Achse ohne Bildung von Hohlräumen bereitstellt.

7. Verfahren nach Anspruch 5 oder Anspruch 6, wobei der Schritt eines Messens der Zugfestigkeit von jedem Teststab (114) ein Messen mindestens eines von Folgenden für jeden Teststab umfasst: Elastizitätsmodul, Bruchdehnung, Streckdehnung, nominelle Bruchdehnung, Sekanten-Elastizitätsmodul oder Poisson-Zahl.

8. Verfahren nach einem vorherigen Anspruch, wobei die Vielzahl von Teststäben (202, 204, 206, 208, 210, 212) im Wesentlichen identische Formen aufweisen.

9. Verfahren nach einem vorherigen Anspruch, wobei die gewählte Charge von Pulvermaterial Polymer aus Polyetherketonketon (PEKK) umfasst, vorzugsweise, wobei die gewählte Charge von Pulvermaterial recyceltes PEKK-Polymer umfasst.

10. Verfahren nach einem vorherigen Anspruch, wobei der Schritt eines Auswählens eines Bereichs von Laserleistung (104) ein Auswählen eines Bereichs zwischen 5 W und 15 W umfasst.

11. Verfahren nach einem vorherigen Anspruch, wobei der Schritt eines Programmierens (108) ein Programmieren der selektiven Lasersintermaschine umfasst, um mindestens fünf Teststäbe der Vielzahl von Teststäben bei jeder Laserleistungseinstellung zu bauen.

12. Verfahren nach einem vorherigen Anspruch, wobei die Schritte eines Auswählens eines Bereichs von Laserleistung (104) und eines Bestimmens eines Leistungsinkrements (106) mindestens acht verschiedene Laserleistungseinstellungen definieren.

13. Verfahren nach einem vorherigen Anspruch, wobei der Schritt eines Programmierens (108) ein Programmieren der selektiven Lasersintermaschine umfasst, um die Vielzahl von Teststäben in einem einzigen Baudurchgang (28) zu bauen.

14. Verfahren zum Durchführen des selektiven Lasersinterns mit einer ausgewählten Charge von Pulvermaterial unter Verwendung einer selektiven Lasersintermaschine, das Verfahren umfassend ein analytisches Bestimmen einer optimalen Laserleistungseinstellung zum Durchführen eines Lasersinterprozesses mit der ausgewählten Charge von Pulvermaterial unter Verwendung eines Verfahrens nach einem der vorherigen Ansprüche und ein Konfigurieren der selektiven Lasersintermaschine mit der optimalen Laserleistung beim Durchführen eines Lasersinterprozesses unter Verwendung der ausgewählten Charge von Pulvermaterial (120).

## Revendications

1. Procédé de détermination analytique d'une puissance laser optimale en vue de la configuration d'un laser dans un processus de frittage laser sélectif, comprenant :
le choix d'un lot de matériau pulvérulent (102) en vue de la fabrication d'une pluralité de barres d'essai (202, 204, 206, 208, 210, 212), ledit lot choisi de matériau pulvérulent comprenant de la poudre de polyaryléthercétone (PAEK) ;
la sélection d'une plage de puissance laser (104) en vue de la fabrication de la pluralité de barres d'essai, comprenant la sélection d'une plage de puissance laser entre 1 W et 20 W ;
la détermination d'une pluralité d'incréments de puissance dans la plage sélectionnée pour définir une pluralité de réglages de puissance laser différents (106) ;
la programmation d'une machine de frittage laser sélectif en vue de la fabrication d'au moins une barre d'essai de ladite pluralité de barres d'essai à chaque réglage de puissance laser (108) ;
la fabrication de la pluralité de barres d'essai à partir du lot de matériau pulvérulent sur la base de ladite programmation (110) ;
l'inspection de chaque barre d'essai pour des vides dans une surface de la barre d'essai (112) ; et
l'identification du réglage de puissance laser utilisé pour construire une barre d'essai respective sans formation de vides dans la surface en tant que puissance laser optimale en vue de la configuration de la machine de frittage laser sélectif lors de la conduite d'un processus de frittage laser à l'aide du lot choisi de matériau pulvérulent (118).

2. Procédé selon la revendication 1, ladite étape d'inspection de chaque barre d'essai pour des vides dans une surface de la barre d'essai (112) comprenant en outre l'étape d'inspection d'un point de fracture de chaque barre d'essai formée durant un processus d'essai ASTM D638.

3. Procédé selon la revendication 1 ou la revendication 2, ladite étape d'inspection de chaque barre d'essai pour des vides (112) comprenant en outre l'inspection d'une porosité de chaque barre d'essai.

4. Procédé selon une quelconque revendication précédente, ladite puissance laser optimale étant d'au moins un watt en dessous d'un réglage de puissance laser le plus bas associé à la formation de vides.

5. Procédé selon une quelconque revendication précédente, comprenant en outre l'étape de mesure d'une résistance à la traction de chaque barre d'essai (114) et de comparaison des résultats de résistance à la traction pour déterminer la résistance de chaque barre d'essai, éventuellement ladite étape de mesure de la résistance à la traction de chaque barre d'essai barre comprenant la mesure de la résistance à la traction de chaque barre d'essai sur un axe z et la comparaison des résultats de résistance à la traction pour déterminer quelle barre d'essai de ladite pluralité de barres d'essai fournit un point de rupture plus élevé sur l'axe z (116) ; de préférence ladite étape de mesure de la résistance à la traction de chaque barre d'essai (114) comprenant l'essai de chaque barre d'essai selon le processus d'essai ASTM D638.

6. Procédé selon la revendication 2, ladite étape d'identification de la puissance laser optimale (118) comprenant la sélection d'un réglage de puissance laser sur la base de l'absence de vides dans la barre d'essai respective et de la résistance à la traction de la barre respective, ladite puissance laser optimale fournissant la résistance la plus élevée sur l'axe z sans formation de vides.

7. Procédé selon la revendication 5 ou la revendication 6, ladite étape de mesure de la résistance à la traction de chaque barre d'essai (114) comprenant la mesure d'au moins l'un des suivants pour chaque barre d'essai : le module d'Young, l'allongement à la rupture, l'allongement à la limite d'élasticité, la déformation à la rupture nominale, le module d'élasticité sécant ou le coefficient de Poisson.

8. Procédé selon une quelconque revendication précédente, ladite pluralité de barres d'essai (202, 204, 206, 208, 210, 212) possédant des formes sensiblement identiques.

9. Procédé selon une quelconque revendication précédente, ledit lot choisi de matériau pulvérulent comprenant un polymère polyéthercétonecétone (PEKK), de préférence ledit lot choisi de matériau pulvérulent comprenant un polymère PEKK recyclé.

10. Procédé selon une quelconque revendication précédente, ladite étape de sélection d'une plage de puissance laser (104) comprenant la sélection d'une plage entre 5 W et 15 W.

11. Procédé selon une quelconque revendication précédente, ladite étape de programmation (108) comprenant la programmation de la machine de frittage laser sélectif en vue de la fabrication d'au moins cinq barres d'essai de ladite pluralité de barres d'essai à chaque réglage de puissance laser.

12. Procédé selon une quelconque revendication précédente, lesdites étapes de sélection d'une plage de puissance laser (104) et de détermination d'un incrément de puissance (106) définissant au moins huit réglages de puissance laser différents.

13. Procédé selon une quelconque revendication précédente, ladite étape de programmation (108) comprenant la programmation de la machine de frittage laser sélectif en vue de la fabrication de ladite pluralité de barres d'essai en une seule passe de fabrication (28).

14. Procédé de réalisation d'un frittage laser sélectif avec un lot sélectionné de matériau pulvérulent à l'aide d'une machine de frittage laser sélectif, ledit procédé comprenant la détermination analytique d'un réglage de puissance laser optimal pour la conduite d'un processus de frittage laser avec le lot sélectionné de matériau pulvérulent à l'aide d'un procédé selon l'une quelconque des revendications précédentes et la configuration de la machine de frittage laser sélectif avec la puissance laser optimale lors de la conduite d'un processus de frittage laser à l'aide du lot choisi de matériau pulvérulent (120).
